# EUROPEAN PATENT APPLICATION

(11) **EP 4 318 641 A1**
(43) Date of publication of application: **07.02.2024**
(21) Application number: 22904663.6
(22) Date of filing: 07.12.2022
(51) Int. Cl.: H01M 4/131, H01M 4/62, H01M 10/42, H01M 4/36, H01M 4/48, H01M 4/587, H01M 4/133, H01M 10/052, H01M 4/02

(54) **LITHIUM SECONDARY BATTERY**

(30) Priority: 09.12.2021 KR 20210175923
(71) Applicant: LG Energy Solution, Ltd., Seoul 07335 (KR)
(72) Inventor: KIM, Jeeeun, Daejeon 34122 (KR)
(74) Representative: Goddar, Heinz J.
(86) International application number: PCT/KR2022/019817
(87) International publication number: WO 2023/106834

(57) **Abstract**

Disclosed is a lithium secondary battery.

## Description

### [Technical Field]

This application claims priority to and the benefit of Korean Patent Application No. 10-2021-0175923 filed with the Korean Intellectual Property Office on December 9, 2021, the entire contents of which are incorporated herein by reference.

This application relates to a lithium secondary battery.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the increase of the technological development and demand for mobile devices, the demand for secondary batteries is also sharply increasing as an energy source. Among such secondary batteries, lithium secondary batteries having high energy density and voltage, long cycle life, and low self-discharging rate have been commercialized and widely used. In addition, as an electrode for such a high-capacity lithium secondary battery, research is being actively conducted on a method for manufacturing a high-density electrode having a higher energy density per unit volume.

In general, a secondary battery includes a positive electrode, a negative electrode, an electrolyte, and a separator. The negative electrode includes a negative electrode active material for intercalating and deintercalating lithium ions from the positive electrode, and silicon-based particles having a high discharge capacity may be used as the negative electrode active material.

Such a lithium secondary battery is usually manufactured by using a lithium-intercalated compound, such as LiCoO₂ or LiMn₂O₄ for the positive electrode, and a nonlithium intercalated material, such as a carbon-based or Si-based material for the negative electrode. During charging, the lithium ions intercalated to the positive electrode move to the negative electrode through the electrolyte solution. During discharging, the lithium ions move back to the positive electrode from the negative electrode. During charging, lithium moving from the positive electrode to the negative electrode reacts with the electrolyte solution to form a kind of passivation film, that is, a solid electrolyte interface (SEI), on a surface of the negative electrode. The SEI inhibits transport of electrons required for the reaction of the negative electrode with the electrolyte solution to prevent decomposition of the electrolyte, thereby stabilizing a structure of the negative electrode. On the other hand, formation of SEI is irreversible to cause consumption of lithium ions. In other words, lithium consumed by the formation of SEI cannot be returned to the positive electrode during the subsequent discharge process, resulting in a drop in battery capacity. This is called irreversible capacity.

As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.

On the other hand, as an effort to improve the performance of the lithium secondary battery, it is needed to develop a technology for accelerating a charging rate. In order to rapidly charge a lithium secondary battery, a movement rate of lithium ions must be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carboncoated layer on a surface of the negative electrode active material layer to increase conductivity.

However, it is difficult to implement a high capacity with a negative electrode having such a thin film negative electrode active material layer. In addition, it is difficult to implement rapid charging in a negative electrode having a high capacity. Further, when using a silicon-based negative electrode, a content of Si in the negative electrode is increased for increasing in energy density, and accordingly, in order to reduce the efficiency of the positive electrode of High Ni, which is a positive electrode material, an excessive amount of sacrificial positive electrode material is applied to be in balance with the negative electrode. However, the increase in amount of the sacrificial positive electrode material causes problems in a unit price, an increase in amount of gas generation in the battery cell itself and the resulting stability.

Therefore, it is necessary to develop a positive electrode material that can be applied while using the high-efficient and high-capacity silicon-based negative electrode.

### CITATION LIST

(Patent Literature 1) Japanese Patent Application Publication No. 2009-080971

### [Detailed Description of the Invention]

### [Technical Problem]

This application relates to a lithium secondary battery.

### [Technical Solution]

An exemplary embodiment of the present specification provides a lithium secondary battery including a positive electrode; a negative electrode; a separator provided between the positive electrode and the negative electrode; and an electrolyte, in which the positive electrode includes a positive electrode current collector; and a positive electrode active material layer, in which the negative electrode includes a negative electrode current collector; and a negative electrode active material layer, in which the positive electrode active material layer includes a positive electrode composition including a positive electrode active material including a single particle positive electrode material and a sacrificial positive electrode material represented by Liₐ₁NiO_{b1} (0<a1<7, 0<b1<15); and a positive electrode conductive material, in which the single particle positive electrode material includes one or more selected from the group consisting of nickel, cobalt, manganese and aluminum and contains 80 mol% or more of the nickel in all metals except lithium, in which the sacrificial positive electrode material is included in an amount of 0.1 part by weight or more and 5 parts by weight or less on the basis of 100 parts by weight of the positive electrode active material, and in which the negative electrode active material layer includes a negative electrode active material including one or more selected from the group consisting of SiOx (0<x<2) and a carbon-based material.

### [Advantageous Effects]

In order to improve capacity/rate performance within a prescribed lithium secondary battery, a material in which a content of Ni is increased should be used for the positive electrode and a material in which a content of Si is increased should be used for the negative electrode. Accordingly, the sacrificial positive electrode material is necessarily required to be included in the positive electrode. However, the sacrificial positive electrode material applied to the positive electrode causes problems in an increase in amount of gas in a cell and a decrease in stability due to relatively low thermal stability.

In the lithium secondary battery according to one embodiment of the present invention, when using a silicon-based active material, which is a high-capacity material, for the negative electrode in order to manufacture a high-capacity battery, a composition of the positive electrode active material layer capable of minimizing an amount of the sacrificial positive electrode material, which is used for the positive electrode facing the negative electrode, is changed. Accordingly, an increase in unit price can be suppressed, and an increase in amount of gas in a cell and a decrease in thermal stability can be prevented.

In particular, there is a difference in amount of gas that is generated in a high-temperature environment, depending on the content of the sacrificial positive electrode material included in the positive electrode of the lithium secondary battery. In the case of using an existing secondary particle positive electrode material, it is inevitable to use an excessive amount of sacrificial positive electrode material. However, in the lithium secondary battery of the present application, the single particle positive electrode material is used for the positive electrode. Accordingly, during roll-pressing an electrode, particle breakage is relatively less than the existing secondary particles to prevent side reactions at high temperatures, thereby minimizing the content of the sacrificial positive electrode material used.
That is, according to the lithium secondary battery of one embodiment of the present application, in order to satisfy specifications of high capacity and high efficiency, a high content of nickel (Ni) is included as a positive electrode material and a Si-based negative electrode material is included as a negative electrode material. Also, the composition and content of the positive electrode composition included in the positive electrode are appropriately changed to reduce an amount of gas generation and to improve stability.

### [Brief Description of Drawings]

FIG. 1 shows a lithium secondary battery according to the present application.
FIG. 2 shows high-temperature trickle charge test results of Example 1, Comparative Example 1, and Comparative Example 2 of the present application.
FIG. 3 shows 0.5 V over-discharge cycle test results of Example 1, Comparative Example 1, and Comparative Example 2 of the present application.

### <Explanation of Reference Numerals and Symbols>

- 11:: upper metal plate
- 12:: vent
- 13:: current interrupt member
- 14:: upper gasket
- 15:: lower gasket
- 16:: tap
- 17:: electrode assembly
- 18:: cylindrical can

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mino II of BEL Japan. That is, in the present application, the BET specific surface area may mean the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight average molecular weight (Mw) and a number average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.
In the present specification, a molecular weight means a weight average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including a positive electrode; a negative electrode; a separator provided between the positive electrode and the negative electrode; and an electrolyte, in which the positive electrode includes a positive electrode current collector; and a positive electrode active material layer, in which the negative electrode includes a negative electrode current collector; and a negative electrode active material layer, in which the positive electrode active material layer includes a positive electrode composition including a positive electrode active material including a single particle positive electrode material and a sacrificial positive electrode material represented by Liₐ₁NiO_{b1} (0<a1<7, 0<b1<15); and a positive electrode conductive material, in which the single particle positive electrode material includes one or more selected from the group consisting of nickel, cobalt, manganese and aluminum and contains 80 mol% or more of the nickel in all metals except lithium, in which the sacrificial positive electrode material is included in an amount of 0.1 part by weight or more and 5 parts by weight or less on the basis of 100 parts by weight of the positive electrode active material, and in which the negative electrode active material layer includes a negative electrode active material including one or more selected from the group consisting of SiOx (0<x<2) and a carbon-based material.

There is a difference in an amount of gas that is generated in a high-temperature environment, depending on the content of the sacrificial positive electrode material included in the positive electrode of the lithium secondary battery. In the case of using an existing secondary particle positive electrode material, it is inevitable to use an excessive amount of sacrificial positive electrode material. However, for the positive electrode of the lithium secondary battery according to the present application, 80 mol% or more of nickel (Ni) is applied based on all metals except lithium included in the single particle positive electrode material. Accordingly, during roll-pressing an electrode, particle breakage is relatively less than the existing secondary particles to prevent side reactions at high temperatures, thereby minimizing the content of the sacrificial positive electrode material used.

In one embodiment of the present application, the single particle positive electrode material may include one or more selected from the group consisting of nickel, cobalt, manganese and aluminum and contain 80 mol% or more of the nickel in all metals except lithium.

In another embodiment, the single particle positive electrode material may include one or more selected from the group consisting of nickel, cobalt, manganese, and aluminum, and contain 80 mol% or more, 88 mol% or more or 92 mol% or more, and 98 mol% or less or 95 mol% or less of the nickel in all metals except lithium.

When the content of nickel is less than the above range, a content of cobalt increases to increase thermal stability. However, the capacity of the positive electrode active material is reduced, thereby causing a problem in that the positive electrode material cannot be applied to an electrochemical device requiring a high capacity.

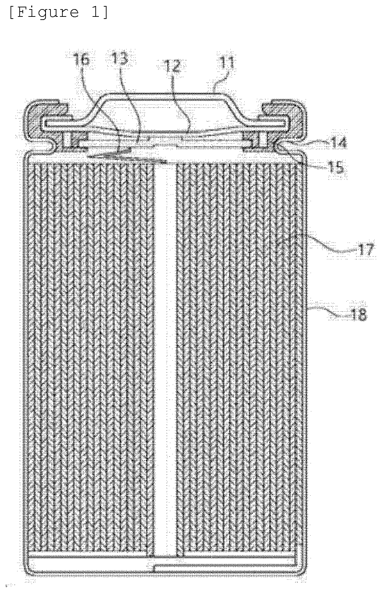

FIG. 1 is a side view showing a lithium secondary battery according to the present application. Specifically, the lithium secondary battery is a cylindrical lithium secondary battery, and includes an upper metal plate 11 and a vent 12, a current interrupt member 13, an upper gasket 14, a lower gasket 15 and a tap 16, which are provided on an upper part of a cylindrical can 18 in which an electrode assembly 17 is provided.

In this case, the electrode assembly may have a structure in which a positive electrode, a negative electrode, and a separator interposed between the positive electrode and the negative electrode are wound.

In one embodiment of the present application, the positive electrode may include a positive electrode current collector, and a positive electrode active material layer formed on the positive electrode current collector and including the positive electrode active material and a positive electrode conductive material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In one embodiment of the present application, the positive electrode active material may include a single particle positive electrode material and a sacrificial positive electrode material represented by Liₐ₁NiO_{b1}. In this case, the single particle positive electrode material may include 80 mol% or more of nickel (Ni) based on all metals included in the single particle positive electrode material.

In the present specification, the presence or absence of elements and the contents of elements in the positive electrode active material can be confirmed through ICP analysis, and the ICP analysis may be performed using an inductively coupled plasma atomic emission spectrometer (ICPAES, Perkin-Elmer 7300).

In the present specification, the single particle positive electrode material means the smallest particle unit that is distinguished as one lump when a cross section of the positive electrode active material is observed through a scanning electron microscope (SEM), and may consist of one crystal grain, or a plurality of crystal grains.

A method of forming the single particle positive electrode material is not particularly limited, but the single particle positive electrode material may be generally formed by over-firing with raised firing temperature, or may be manufactured by using additives that help over-firing, by changing a starting material, or the like. By forming the positive electrode with single particles as described above, thermal stability can be improved, and increases in side reaction and resistance can be suppressed. The positive electrode active material in the form of a single particle positive electrode material may be formed by, for example, adding and mixing a lithium source such as LiOH and Li₂CO₃ in a composite transition metal hydroxide including nickel, cobalt, and manganese, and then over-firing the mixture at 800°C to 900°C for 10 hours to 25 hours under an oxygen atmosphere.

In one embodiment of the present application, the single particle is a term used to distinguish the same from a positive electrode active material particle in a form of a secondary particle resulting from aggregation of tens to hundreds of primary particles generally used in the related art, and is a concept including a single particle consisting of one primary particle and an aggregate particle of 10 or less primary particles.

That is, the positive electrode according to the present application includes the single particle positive electrode material. In the case of the single particles, unlike secondary particles, in a roll-pressing process during electrode manufacturing, particle breakage is relatively small, and accordingly, the positive electrode including the same can serve to suppress a side reaction at high temperatures.

In one embodiment of the present application, the single particle positive electrode material may mean that it may be included in the positive electrode active material. Specifically, the positive electrode active material may be expressed including the single particle positive electrode material and the sacrificial positive electrode material. In this case, the single particle positive electrode material is used as a meaning distinguished from the secondary particle positive electrode material.

In one embodiment of the present application, the single particle positive electrode material may be in the form of a single particle in a commonly used positive electrode active material.

In one embodiment of the present application, there is provided the lithium secondary battery in which the single particle positive electrode material is a nickel-cobalt-manganese (NCM) oxide, or a nickel-cobalt-manganese-aluminum (NCMA) oxide, and nickel included in the nickel-cobalt-manganese (NCM) oxide and nickel-cobalt-manganese-aluminum (NCMA) oxide is included in an amount of 80 mol% or more in all metals except lithium.

In another embodiment, the single particle positive electrode material is nickel-cobalt-manganese (NCM) oxide, or nickel-cobalt-manganese-aluminum (NCMA) oxide, and nickel included in the nickel-cobalt-manganese (NCM) oxide and nickel-cobalt-manganese-aluminum (NCMA) oxide may be included in an amount of 80 mol% or more, preferably 85 mol% or more, more preferably 88 mol% or, and most preferably 93 mol% or more in all metals except lithium. In addition, the content of nickel (Ni) may be 99 mol% or less, or 95 mol% or less, based on all metals.

When the content of nickel is less than the above range, a content of cobalt increases to increase thermal stability. However, the capacity of the positive electrode active material is reduced, thereby causing a problem in that the positive electrode material cannot be applied to an electrochemical device requiring a high capacity.

On the other hand, as the content of nickel is higher within the above range, the lithium secondary battery including the same may exhibit higher capacity characteristics. However, as the content of nickel increases, the content of cobalt and/or manganese relatively decreases, and accordingly, thermal stability may be lowered. Therefore, the efficiency of the lithium secondary battery according to the present application may be maximized when the content of nickel is within the above range.

In one embodiment of the present application, the nickel-cobalt-manganese (NCM) oxide may be represented as lithium nickel-cobalt-manganese oxide as follows, and lithium nickel-cobalt-manganese (NCM) oxide is a Ni-Co-Mn 3-component system positive electrode active material represented by Li₁₊ₓ(NiₐCo_{b}Mn_{c})O₂ (0.97≤x≤1.06, 0<a<1, 0<b<1, 0<c<1, a+b+c=1), a Ni-Co-Mn 3-component system positive electrode active material represented by Li₁₊ₓ(NiₐCo_{b}Mn_{c})O₄ (0.97≤x≤1.06, 0 <a<2, 0<b<2, 0<c<2, a+b+c=2) or a mixture thereof, and is a composite body made to combine features such as high capacity of a nickel-containing oxide, thermal stability of a manganese-containing oxide and excellent electrochemical characteristics of a cobalt-containing oxide. The lithium nickel-cobalt-manganese (NCM) oxide may be doped with a small amount of a metal element to the extent that satisfies the purpose of the present invention. For example, each of the lithium nickel-cobalt-manganese (NCM) oxide represented by a Ni-Co-Mn 3-component system positive electrode active material represented by Li₁₊ₓ(NiₐCo_{b}Mn_{c})O₂ (0.97≤x≤1.06, 0 <a<1, 0<b<1, 0<c<1, a+b+c=1) or Li₁₊ₓ (NiₐCo_{b}Mn_{c})O₄ (0.97≤x≤1.06, 0 <a<2, 0<b<2, 0<c<2, a+b+c=2) may be independently doped with one or two or more metals selected from the group consisting of Na, K, Mg, Ca, Sr, Ni, Co, Ti, Al, Si, Sn, Mn, Cr, Fe, V and Zr, as a non-limiting example.

The amount of the metal doped into the lithium nickel-cobalt-manganese (NCM) may be within a range that does not significantly increase positive electrode resistance. For example, the doping metal in lithium nickel-cobalt-manganese (NCM) oxide may be within a range of 10 to 1500 ppm, 50 to 1000 ppm, or 100 to 500 ppm based on each element, but is not limited thereto. As a non-limiting example, lithium nickel-cobalt-manganese (NCM) oxide generally uses 2 to 3 elements as the doping metals, and the doping metals may be present in an amount of hundreds of ppm based on each element.

In one embodiment of the present application, the content of nickel included in the nickel-cobalt-manganese (NCM) oxide may be 80 mol% or more, specifically 85 mol% or more, more specifically 88 mol% or more, and further specifically 93 mol% or more in all metals except lithium.

In the Formula represented by Li₁₊ₓ(NiₐCo_{b}Mn_{c})O₂ (0.97≤x≤1.06, 0 <a<1, 0<b<1, 0<c<1, a+b+c=1), the content of nickel may mean a ratio of a included. That is, in the case of a 3-component system, it may mean a ratio of nickel among metals of nickel, cobalt, and manganese.

In one embodiment of the present application, the nickel-cobalt-manganese-aluminum (NCMA) oxide may be represented as lithium nickel-cobalt-manganese-aluminum oxide as follows, and lithium nickel-cobalt-manganese-aluminum (NCMA ) oxide is a Ni-Co-Mn-Al 4-component system positive electrode active material represented by Li₁₊ₓ(NiₐCo_{b}Mn_{c}Al_{d})O₂ (0.97≤x≤1.06, 0 <a<1, 0<b<1, 0<c<1, 0<d<1 a+b+c+d=1), a Ni-Co-Mn-Al 4-component system positive electrode active material represented by
Li₁₊ₓ(NiₐCO_{b}Mn_{c}Al_{d})O₄(0.97≤x≤1.06, 0 <a<2, 0<b<2, 0<c<2, 0<d<2 a+b+c+d=2) or a mixture thereof, and is a composite body made to combine features such as high capacity of a nickel-containing oxide, thermal stability of a manganese-containing oxide and excellent electrochemical characteristics of a cobalt-containing oxide. The lithium nickel-cobalt-manganese-aluminum (NCMA) oxide may be doped with a small amount of a metal element to the extent that satisfies the purpose of the present invention.

For example, each of the lithium nickel-cobalt-manganese (NCM) represented by Ni-Co-Mn-Al 4-component system positive electrode active material represented by Li₁₊ₓ(NiₐCo_{b}Mn_{c}Al_{d})O₂ (0.97≤x≤1.06, 0 <a<1, 0<b<1, 0<c<1, 0<d<1 a+b+c+d=1) or Li₁₊ₓ(NiₐCO_{b}Mn_{c}Al_{d})O₄ (0.97≤x≤1.06, 0 <a<2, 0<b<2, 0<c<2, 0<d<2 a+b+c+d=2) may be independently doped with one or two or more metals selected from the group consisting of Na, K, Mg, Ca, Sr, Ni, Co, Ti, Al, Si, Sn, Mn, Cr, Fe, V and Zr as a non-limiting example.

In one embodiment of the present application, the content of nickel included in the nickel-cobalt-manganese-aluminum (NCMA) oxide may be 80 mol% or more, specifically 85 mol% or more, more specifically 88 mol%, and further specifically 93 mol% in all metals except lithium.

In the Formula represented by
Li₁₊ₓ(NiₐCO_{b}Mn_{c}Al_{d})O₂(0.97≤x≤1.06, 0 <a<1, 0<b<1, 0<c<1, 0<d<1 a+b+c+d=1), the content of nickel may mean a ratio of a included. That is, in the case of a 4-component system, it may mean a ratio of nickel among metals of nickel, cobalt, manganese, and aluminum.

In one embodiment of the present application, the average particle diameter (D50) of the single particle positive electrode material may be 1 um or more to 10 um or less, preferably 2 um to 7 um. That is, the single particle positive electrode material may include a small particle form.

In one embodiment of the present application, even when the positive electrode active material is formed with single particles, and therefore, is formed with a small average particle diameter (D50) of 1 um or more to 10 um or less, the particle strength may be excellent. For example, the single particle positive electrode material may have a particle strength of 100 to 300 MPa during roll-pressing with a force of 650 kgf/cm².

Accordingly, even when the single particle positive electrode material is roll-pressed with a strong force of 650 kgf/cm², the increase phenomenon of micro-particles in an electrode due to particle breakage is alleviated, thereby improving the lifespan characteristic of the battery.

In one embodiment of the present application, there is provided the lithium secondary battery in which the positive electrode active material further includes a secondary particle positive electrode material, and the single particle positive electrode material and the secondary particle positive electrode material satisfy a weight ratio of 2:8 to 5:5.

Specifically, the positive electrode active material may further include a secondary particle positive electrode material, and the single particle positive electrode material and the secondary particle positive electrode material may satisfy a weight ratio of 2:8 to 5:5, more specifically, 2:8 to 3:7 (single particle positive electrode material: secondary particle positive electrode material).

The secondary particle positive electrode material may be further included within the range based on the positive electrode active material. Accordingly, the ratio of the sacrificial positive electrode material used is minimized and the high output of the lithium secondary battery can be achieved.

The secondary particle positive electrode material is the same as described above and may be the same as the type of the single particle positive electrode material, but may mean a form in which the single particle positive electrode material is aggregated.

In one embodiment of the present application, the secondary particle positive electrode material may include a large particle form and a small particle form in a bimodal form, and the average particle diameter (D50) of the secondary particle positive electrode material may be 5 um to 20 um, preferably 7 um to 15 um.

In one embodiment of the present application, the positive electrode active material may include a sacrificial positive electrode material represented by Liₐ₁NiO_{b1}(0<a1<7, 0<b1<15), and may include 0.1 part by weight or more and 5 parts by weight or less of the sacrificial positive electrode material on the basis of 100 parts by weight of the positive electrode active material.

In another embodiment, the sacrificial positive electrode material may be included in an amount of 0.1 part by weight or more and 5 parts by weight or less, preferably 1 part by weight or more and 5 parts by weight or less, and more preferably 3 parts by weight or more and 5 parts by weight or less on the basis of 100 parts by weight of the positive electrode active material.

That is, in the case of using only the existing secondary particle positive electrode material, it is inevitable to use an excessive amount of sacrificial positive electrode material. However, in the lithium secondary battery of the present application, the single particle positive electrode material is used for the positive electrode. Accordingly, during roll-pressing an electrode, particle breakage is relatively less than the existing secondary particles to prevent side reactions at high temperatures. Therefore, when the content of the sacrificial positive electrode material used falls within the above range, the stability of the battery is increased.

In one embodiment of the present application, the sacrificial positive electrode material may be represented by Li₂NiO₂, but is not limited thereto.

In one embodiment of the present application, the sacrificial positive electrode material serves as a lithium source during charging, and a material that has a high charge capacity, a low discharge capacity, and a high irreversible capacity relative to the positive electrode material according to the present application may be used.

The positive electrode active material layer may include a positive electrode conductive material and a positive electrode binder together with the single particle positive electrode material and the sacrificial positive electrode material (positive electrode active material) described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in one embodiment of the present application, there is provided the lithium secondary battery in which the positive electrode conductive material includes a single-walled carbon nanotube (SWCNT), or a multi-walled carbon nanotube (MWCNT), and is included in an amount of 0.1 part by weight or more and 2 parts by weight or less on the basis of 100 parts by weight of the positive electrode composition.

In another embodiment, the positive electrode conductive material may be included in an amount of 0.1 part by weight or more and 2 parts by weight or less, preferably 0.3 part by weight or more and 1.5 parts by weight or less, and more preferably 0.5 part by weight or more and 1.2 parts by weight or less on the basis of 100 parts by weight of the positive electrode composition.

In addition, the positive electrode binder serves to improve adhesion between the positive electrode active material particles and adhesive force between the single particle positive electrode material and the positive electrode current collector. Specific examples may include polyvinylidene fluoride (PVDF), vinylidene fluoridehexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

In this case, the positive electrode binder may be included in an amount of 0.1 part by weight or more and 10 parts by weight or less, and preferably 1 part by weight or more and 5 parts by weight or less, on the basis of 100 parts by weight of the positive electrode composition.

In one embodiment of the present application, the negative electrode may include a negative electrode current collector; and a negative electrode active material layer, in which the negative electrode active material layer may include a negative electrode active material including one or more selected from the group consisting of SiOx (0<x<2) and a carbon-based material.

In addition, in one embodiment of the present application, there is provided the lithium secondary battery in which the negative electrode active material layer includes a negative electrode conductive material, and a negative electrode binder.

In one embodiment of the present application, the SiOx (0<x<2) corresponds to a matrix within the silicon-based composite particle. The SiO (0<x<2) may be a form of including Si and SiO₂, and the Si may form a phase. That is, x corresponds to a ratio of the number of O to Si included in the SiO (0<x<2). When the silicon-based composite particle includes the SiO(0<x<2), a discharge capacity of a secondary battery can be improved.

In one embodiment of the present specification, the Mg compound phase may be present in an inside and/or on a surface of the SiOx (0<x<2) serving as a matrix. The initial efficiency of the battery can be improved by the Mg compound phase.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

An average particle diameter (D50) of the SiOx (0<x<2) of the present invention may be 5 um to 10 um, specifically 5.5 um to 8 µm, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the SiOx (0<x<2) has a value equal to or greater than the lower limit value, a contact area between the SiOx (0<x<2) and the conductive material is excellent due to the composite body consisting of the conductive material and the binder in the negative electrode slurry, so that a sustaining possibility of the conductive network increases, thereby increasing the capacity retention. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In one embodiment of the present application, the SiOx (0<x<2) generally has a characteristic BET surface area. The BET surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET surface area is measured in accordance with DIN 66131 (using nitrogen).

In one embodiment of the present application, the SiOx (0<x<2) may be present, for example, in a crystalline or amorphous form, and is preferably not porous. The silicon particles are preferably spherical or splintershaped particles. Alternatively, but less preferably, the silicon particles may also have a fiber structure or be present in the form of a silicon-containing film or coating.

In one embodiment of the present application, there is provided the lithium secondary battery in which the negative electrode active material includes an Mg compound phase or a Li compound phase.

In one embodiment of the present specification, the Mg compound phase may be present in an inside and/or on a surface of the SiOx (0<x<2) serving as a matrix. The initial efficiency of the battery can be improved by the Mg compound phase.

The Mg compound may include at least one selected from the group consisting of Mg silicate, Mg silicide, and Mg oxide. The Mg silicate may include at least one of Mg₂SiO₄ or MgSiO₃. The Mg silicide may include Mg₂Si. The Mg oxide may include MgO.

In one embodiment of the present specification, the Li compound phase may be present in an inside and/or on a surface of the SiOx (0<x<2) serving as a matrix. The initial efficiency of the battery can be improved by the Li compound phase.

The Li compound may include at least one selected from the group consisting of Li silicate, Li silicide, and Li oxide. The Li silicate may include at least one of Li₂SiO₃, Li₄SiO₄ or Li₂Si₂O₅.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the Mg element content of the prepared negative electrode active material can be analyzed.

In one embodiment of the present application, the negative electrode active material may include a carbon-based material, and specifically, the carbon-based material may be graphite.

In one embodiment of the present application, there is provided the lithium secondary battery in which the SiOx (0<x<2) is included in an amount of 1 part by weight or more and 50 parts by weight or less, and the carbon-based material is included in an amount of 50 parts by weight or more and 99 parts by weight or less on the basis of 100 parts by weight of the negative electrode active material.

In another embodiment, the SiOx (0<x<2) may be included in an amount of 1 part by weight or more and 50 parts by weight or less, preferably 3 parts by weight or more and 45 parts by weight or less, and more preferably 4 parts by weight or more and 40 parts by weight or less on the basis of 100 parts by weight of the negative electrode active material.

In another embodiment, the carbon-based material may be included in an amount of 50 parts by weight or more and 99 parts by weight or less, preferably 55 parts by weight or more and 97 parts by weight or less, and more preferably 60 parts by weight or more and 96 parts by weight or less on the basis of 100 parts by weight of the negative electrode active material.

In one embodiment of the present application, the negative electrode active material is adjusted to the above weight, and the sacrificial positive electrode material included in the positive electrode as described above is adjusted to the above weight. The most optimal sacrificial positive electrode material is included according to the above range of the negative electrode active material used, and accordingly, the negative electrode active material is made to have the above range, so that the electrode has excellent performance characteristics.

In one embodiment of the present application, there is provided the lithium secondary battery in which the sacrificial positive electrode material and the SiOx (0<x<2) satisfy a weight ratio of 1:3 to 1:8 (sacrificial positive electrode material: SiOx).

In another exemplary embodiment, the sacrificial positive electrode material and the SiOx (0<x<2) may satisfy a weight ratio of 1:3 to 1:8, preferably 1:4 to 1:7, and more preferably 1:5.

The ratio may mean a weight ratio of the sacrificial positive electrode material and SiOx (0<x<2) included in the lithium secondary battery.

In the lithium secondary battery according to one embodiment of the present invention, when using a silicon-based active material, which is a high-capacity material, for a negative electrode in order to manufacture a high-capacity battery, a composition of the positive electrode active material layer capable of minimizing an amount of the sacrificial positive electrode material, which is used for the positive electrode facing the negative electrode, is changed to the composition of the present application.

That is, as the ratio of the sacrificial positive electrode material and SiOx (0<x<2) is satisfied, when manufacturing an optimal lithium secondary battery, the minimum sacrificial positive electrode material is included, so that it is possible to reduce the amount of gas generation and to manufacture a high-capacity secondary battery.

In one embodiment of the present application, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the negative electrode current collector. A thickness of the negative electrode current collector may be 6 um to 20 um. However, the thickness of the negative electrode current collector is not limited thereto.

The negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or greater layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used when manufacturing a lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F-, Cl⁻, I⁻, NO₃⁻, N(CN)₂⁻, BF₄⁻, ClO₄⁻, PF₆-, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

In one embodiment of the present application, there is provided the lithium secondary battery in which the positive electrode and negative electrode current collectors each have a thickness of 1 um or more and 100 um or less, and the positive electrode and negative electrode active material layers each have a thickness of 20 um or more and 500 um or less.

In one embodiment of the present application, there is provided the lithium secondary battery in which the initial efficiency of the positive electrode is lower than the initial efficiency of the negative electrode and the initial efficiency of the positive electrode is 89% or less.

That is, the lithium secondary battery according to the present application uses materials having the above-described compositions and contents for the positive electrode and the negative electrode, and has such a feature that the initial efficiency of the positive electrode is lowered relatively to the negative electrode by including a specific content of the sacrificial positive electrode material.

In addition, in one embodiment of the present application, there is provided the lithium secondary battery in which a capacity retention under a 0.5 V over-discharge condition of 200 cycles of the lithium secondary battery is 70% or higher.

In another embodiment, the capacity retention under a 0.5 V over-discharge condition of 200 cycles of the lithium secondary battery may be 70% or higher and 80% or less, specifically 75%.

That is, the lithium secondary battery according to the present application is a high-output secondary battery, and is designed such that the efficiency of the positive electrode is lowered relatively to the negative electrode, as described above. In this case, the capacity retention under the 0.5 V over-discharge condition of 200 cycles is 70% or higher, so that it is possible to reduce deterioration of the negative electrode according to the discharge.

One embodiment of the present invention provides a battery module including the lithium secondary battery as a unit cell, and a battery pack including the same. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

In one embodiment of the present application, the lithium secondary battery may be a cylindrical lithium secondary battery in which the cylindrical shape may mean that the shape of the battery itself including an assembly including a positive electrode, a negative electrode, a separator, and an electrolyte is cylindrical, and specifically, may include a cylindrical can, a battery assembly provided inside the cylindrical can, and a top cap.

In this case, the specifications of the cylindrical can, the battery assembly provided inside the cylindrical can, and the top cap may include all specifications generally used in the art.

In one embodiment of the present application, the lithium secondary battery may be formed by applying a positive electrode slurry including the positive electrode composition and a positive electrode slurry solvent to one surface or both surfaces of a positive electrode current collector, and drying and roll-pressing the applied slurry.

In this case, a solid content of the positive electrode slurry may be 1% to 40%.

In one embodiment of the present application, the positive electrode slurry may have a viscosity of 1000cps or more and 16000cps or less, specifically 1000cps or more and 15500cps or less, and more specifically 3000cps or more and 15500cps or less under conditions of 40°C and RH 10%.

In one embodiment of the present application, the positive electrode slurry may have a viscosity of 3000cps or more and 10000cps or less, specifically 5000cps or more and 9000cps or less, and more specifically 6000cps or more and 8500cps or less, after 1 day under conditions of 40°C and RH 10%.

The above range of the positive electrode slurry is related to the content of the sacrificial positive electrode material described above, and the viscosity including the above range is not formed too high, so that gelation does not occur, and therefore, the stability of the slurry can be secured.

In one embodiment of the present application, the lithium secondary battery may be formed by applying a negative electrode slurry including the negative electrode composition and a negative electrode slurry solvent to one surface or both surfaces of a negative electrode current collector, and drying and roll-pressing the applied slurry.

In this case, a solid content of the negative electrode slurry may be 1% to 40%.

In one embodiment of the present application, the negative electrode slurry solvent or the positive electrode slurry solvent may be used without limitation as long as the solvent is a material capable of dissolving the negative electrode composition or the positive electrode composition, and specifically, distilled water or N-methylpyrrolidone(NMP) may be used.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Examples>

### Example 1

### (1) Manufacturing of Positive Electrode

96 parts by weight of Li(NiₐCo_{b}Mn_{c})O₂ serving as a single particle positive electrode material and 4 parts by weight of (Li₂NiO₂-(LNO)) serving as a sacrificial positive electrode material were mixed to manufacture a positive electrode active material.

At this time, NCM of the single particle positive electrode material except lithium (Li) and oxygen (O₂) had a ratio of Ni:Co:Mn = 93:5:2 and satisfied the ratio of a:b:c = 93:5:2 (a:b:c = 0.93:0.05:0.02). Also, D50 was 3.8 um (single particle). The single particle positive electrode material had Dmin and Dmax of 1.2 um and 13 um, a BET specific surface area of 0.64 m² and a true density of 4.78 to 4.80g/cm³.

In addition, the positive electrode active material, the positive electrode conductive material (B.CNT), and the binder (PVdF, KF9700) were added to a solvent (N-methylpyrrolidone, NMP) in a weight ratio of 97.96:0.8:1.24 to manufacture a positive electrode slurry. The positive electrode slurry was applied to an aluminum (Al) thin film having a thickness of 25 um, which was a positive electrode current collector, dried, and then roll-pressed to manufacture a positive electrode.

### (2) Manufacturing of Negative Electrode

As a negative electrode active material, natural graphite (true density 2.33g/cm³, charge capacity 391.3%, efficiency 92%) and SiO (Daeju Electronic Materials Co., Ltd. E-82, true density 2.453g/cm³, charge capacity 1689.10, charge efficiency 81.7 to 82%) were used in a weight ratio of 80:20.

The negative electrode active material, the binder (styrene butadiene rubber; SBR), and CMC (carboxymethylcellulose) were added to a solvent H₂O in a weight ratio of 98:1:1 to manufacture a negative electrode slurry. The negative electrode slurry was applied to a copper (Cu) thin film having a thickness of 15 um, which was a negative electrode current collector, dried, and then roll-pressed to manufacture a negative electrode.

### (3) Manufacturing of Secondary Battery

An electrode assembly was manufactured by interposing an SRS-coated separator (polyolefin) between the positive electrode and the negative electrode. After placing the electrode assembly inside a case, an electrolyte solution was injected into the case to manufacture a lithium secondary battery.

### Example 2

A lithium secondary battery was manufactured in the same manner as in Example 1, except that 99 parts by weight of Li(NiₐCo_{b}Mn_{c})O₂ serving as a single particle positive electrode material and 1 part by weight of (Li₂NiO₂-(LNO)) serving as a sacrificial positive electrode material in Example 1 were mixed to manufacture a positive electrode active material.

### Example 3

A lithium secondary battery was manufactured in the same manner as in Example 1, except that 96 parts by weight of Li(NiₐCO_{b}Mn_{c}Al_{d})O₂ serving as a single particle positive electrode material and 4 parts by weight of (Li₂NiO₂-(LNO)) serving as a sacrificial positive electrode material in Example 1 were mixed to manufacture a positive electrode active material.

At this time, NCMA of the single particle positive electrode material except lithium (Li) and oxygen (O₂) had a ratio of Ni:Co:Mn:Al = 93:5:1:1 and satisfied the ratio (a:b:c:d = 0.93:0.05:0.01:0.01).

### Example 4

A lithium secondary battery was manufactured in the same manner as in Example 1, except that 47.5 parts by weight of Li(NiₐCo_{b}Mn_{c})O₂ serving as a single particle positive electrode material, 47.5 parts by weight of Li(NiₐCo_{b}Mn_{c})O₂ serving as a secondary particle positive electrode material, and 5 parts by weight of (Li₂NiO₂-(LNO)) serving as a sacrificial positive electrode material in Example 1 were mixed to manufacture a positive electrode active material (a:b:c=0.93:0.05:0.02).

### Comparative Example 1

A lithium secondary battery was manufactured in the same manner as in Example 1, except that 100 parts by weight of the single particle positive electrode material in Example 1 was mixed to manufacture a positive electrode active material.

### Comparative Example 2

A lithium secondary battery was manufactured in the same manner as in Example 1, except that 93 parts by weight of Li(NiₐCO_{b}Mn_{c}Al_{d})O₂(secondary particle, a:b:c:d = 0.88:0.05:0.02:0.05) as the secondary particle positive electrode material instead of the single particle positive electrode material in Example 1 and 7 parts by weight of the sacrificial positive electrode material in Example 1 were included.

### Comparative Example 3

A lithium secondary battery was manufactured in the same manner as in Example 1, except that 96 parts by weight of Li(NiₐCO_{b}Mn_{c}Al_{d})O₂(secondary particle, a:b:c:d = 0.88:0.05:0.02:0.05) as the secondary particle positive electrode material instead of the single particle positive electrode material in Example 1 and 4 parts by weight of the sacrificial positive electrode material in Example 1 were included.

### Comparative Example 4

In Example 1, 92 parts by weight of Li(NiₐCo_{b}Mn_{c})O₂ serving as the single particle positive electrode material and 8 parts by weight of (Li₂NiO₂-(LNO)) serving as the sacrificial positive electrode material were mixed to manufacture a positive electrode active material.

### Comparative Example 5

A lithium secondary battery was manufactured in the same manner as in Example 1, except that 100 parts by weight of Li(NiₐCO_{b}Mn_{c}Al_{d})O₂(secondary particle, a:b:c:d = 0.88:0.05:0.02:0.05) serving as the secondary particle positive electrode material in Example 1 were mixed to manufacture a positive electrode active material.

For the lithium secondary batteries manufactured in Examples and Comparative Examples, a high-temperature trickle charge test and a 0.5 V over-discharge cycle test were performed under following conditions, respectively.

### <High-Temperature Trickle Charge Test>

Charging and discharging were continued under following conditions by using a charge/discharge measuring device (PNE), and runtime during discharging was compared.
- Charge: 2.7 A to 4.19 V and 1.1 A to 4.20 V @60°C
- Discharge: 10 mA for 60sec @60°C& Charge 1.1 A to 4.20 V @60°C. Repeat for 24 hours
- Discharge: 80 W to 2.65 V or 83°C @23°C

The above steps were repeated.

### <0.5V Over-discharge Cycle Test>

Charging and discharging were continued under the following conditions by using the charge/discharge measuring device (PNE), and capacity during discharging was compared.
- Charge: CCCV 3 A, 4.2 V to 0.05 A [Rest] 10min @RT(25°C)
- Discharge: 10 A to 0.5 V or 80°C cut-off [Rest] 45min @RT(25°C)

The above steps were repeated.

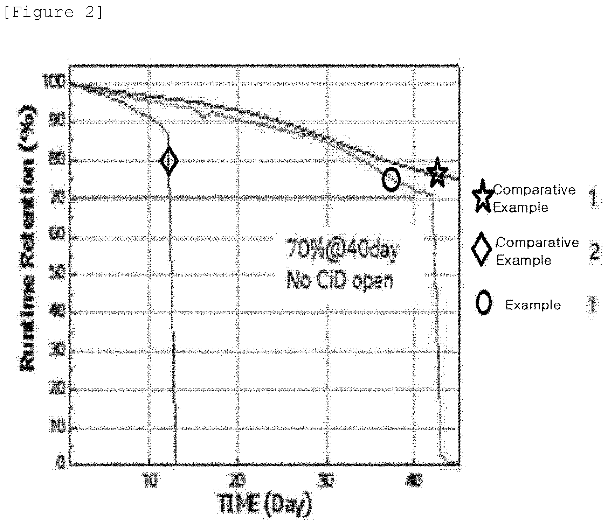

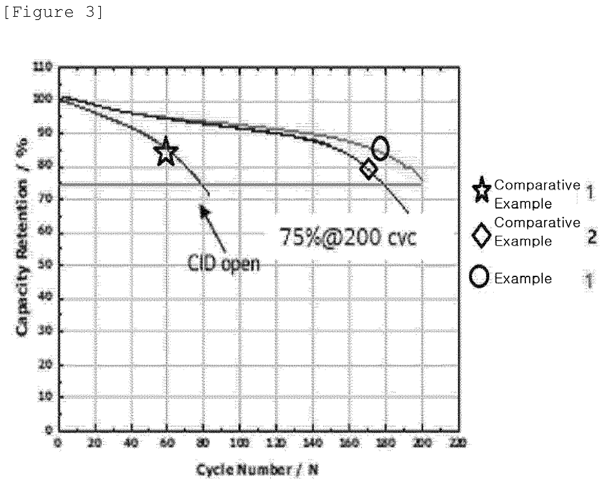

FIG. 2 shows high-temperature trickle charge test results of Example 1, Comparative Example 1, and Comparative Example 2, and the runtime retentions relating to Examples 1 to 4 and Comparative Examples 1 to 5 are shown in Table 1. FIG. 3 shows 0.5 V over-discharge cycle test results of Example 1, Comparative Example 1, and Comparative Example 2, and the capacity retentions relating to Examples 1 to 4 and Comparative Examples 1 to 5 are shown in Table 1.

**[Table 1]**

| | Runtime Retention (%) | capacity retention (%) |
|---|---|---|
| Comparative Example 1 | 77% @40day | CID open @80^{th} |
| Comparative Example 2 | CID open (end test) | 75% @180^{th} |
| Comparative Example 3 | CID open (end test) | 73% @180^{th} |
| Comparative Example 4 | 69.5% @40day | 75% @200^{th} |
| Comparative Example 5 | CID open (end test) | CID open @70^{th} |
| Example 1 | 72% @40day | 76% @200^{th} |
| Example 2 | 710 @40day | 75.2% @200^{th} |
| Example 3 | 73% @40day | 76% @200^{th} |
| Example 4 | 710 @40day | 75.5% @200^{th} |

As can be seen in Table 1, it was confirmed that in the lithium secondary batteries of Examples 1 to 4, CID open did not occur based on 40 days, and the runtime retention satisfied 71% to 73% of a reference on 40 days when the first day was 100% as the reference. In addition, it was confirmed that in the case of the lithium secondary battery of Example 1, when the 0.5V over-discharge cycle test was performed, the capacity based on 200 cycles was maintained at 76% relative to one cycle capacity, and 75.2% in Example 2, 76% in Example 3, and 75.5% in Example 4.

On the other hand, it was confirmed that in Comparative Example 1 in which the single particle positive electrode material was included but the sacrificial positive electrode material was not included, the runtime retention was 77%, i.e., relatively good, but the CID open occurred based on 80 cycles during the 0.5 V over-discharge cycle test and thus the cell drive stopped.

In addition, it was confirmed that in Comparative Example 2 in which the secondary particle positive electrode material was used and an excessive amount of the sacrificial positive electrode material was used, during the 0.5 V over-discharge cycle test, the capacity based on 180 cycles was lowered to 75% relative to one cycle and the CID open occurred based on 40 days during the runtime retention test and thus the cell drive stopped due to a short circuit.

Unlike the present invention, Comparative Example 3 corresponds to a case in which the secondary particle positive electrode material is used and the sacrificial positive electrode material is used within the range of the present invention. In this case, it was confirmed that, during the runtime retention test, the CID open occurred based on 40 days and thus the cell drive stopped due to a short circuit, and that during the 0.5 V over-discharge cycle test, the capacity based on 180 cycles was lowered to 73% relative to one cycle.

Comparative Example 4 shows that the sacrificial positive electrode material was used in a range exceeding the weight part of the present invention, and Comparative Example 5 corresponds to a case in which the secondary particle positive electrode material was used alone without using the sacrificial positive electrode material of the present invention. It was confirmed that, in Comparative Example 4, the runtime retention dropped to 69.5%, and that, in Comparative Example 5 in which the single particle and the sacrificial positive electrode material were not included, CID open occurred in all evaluations and the cell drive stopped due to a short circuit.

### <Slurry Viscosity Test>

For the positive electrode slurries of Example 1, Example 2, and Comparative Example 4, the viscosity of the positive electrode slurry according to storage in the same environment after manufacturing was each measured at intervals of 0 to 3 days, and results thereof are shown in Table 2. At this time, the environment after manufacturing of the positive electrode slurry specifically corresponded to an environment of 40°C and RH 10%.

**[Table 2]**

| | 0 day | 1 day | 2 days | 3 days |
|---|---|---|---|---|
| Example 1 | 4800cps | 8150cps | 15500cps | Gelation |
| Example 2 | 4400cps | 8000cps | 14800cps | Gelation |
| Comparative Example 4 | 6100cps | Gelation | - | - |

From the results in Table, 2, it was confirmed that, in Examples 1 and 2, the viscosity of the positive electrode slurry was maintained without any problem to the extent of forming a positive electrode until the second day of storage, and that, in Comparative Example 4 in which the amount of the sacrificial positive electrode material exceeded the weight range of the present invention, gelation occurred after 1 day due to the rapid increase in viscosity. This corresponds to a case where gelation occurred as an index that affects processability during electrode manufacturing in an actual mass production line, and it was confirmed that the stability of the slurry was not secured in Comparative Example 4.

That is, through the above experiments, the following was confirmed. When using the existing secondary particle positive electrode material, it was inevitable to use an excessive amount of the sacrificial positive electrode material. However, in the lithium secondary battery according to the present application, the single particle positive electrode material was applied to the positive electrode. Accordingly, during roll-pressing an electrode, particle breakage was relatively less than the existing secondary particles to prevent side reactions at high temperatures, thereby minimizing the content of the sacrificial positive electrode material used. As a result, the battery in which the amount of gas generation was reduced and the stability was high could be formed.

## Claims

1. A lithium secondary battery comprising:
a positive electrode;
a negative electrode;
a separator provided between the positive electrode and the negative electrode; and
an electrolyte,
wherein the positive electrode comprises a positive electrode current collector, and a positive electrode active material layer,
wherein the negative electrode comprises a negative electrode current collector, and a negative electrode active material layer,
wherein the positive electrode active material layer comprises a positive electrode composition comprising a positive electrode active material comprising a single particle positive electrode material and a sacrificial positive electrode material represented by Liₐ₁NiO_{b1} (0<a1<7, 0<b1<15), and a positive electrode conductive material,
wherein the single particle positive electrode material comprises one or more selected from the group consisting of nickel, cobalt, manganese and aluminum and contains 80 mol% or more of the nickel in all metals except lithium,
wherein the sacrificial positive electrode material is included in an amount of 0.1 part by weight or more and 5 parts by weight or less on a basis of 100 parts by weight of the positive electrode active material, and
wherein the negative electrode active material layer comprises a negative electrode active material comprising one or more selected from the group consisting of SiOx (0<x<2) and a carbon-based material.

2. The lithium secondary battery of claim 1, wherein the single particle positive electrode material is a nickel-cobalt-manganese (NCM) oxide, or a nickel-cobalt-manganese-aluminum (NCMA) oxide, and
wherein nickel included in the nickel-cobalt-manganese (NCM) oxide and nickel-cobalt-manganese-aluminum (NCMA) oxide is included in an amount of 80 mol% or more in all metals except lithium.

3. The lithium secondary battery of claim 1, wherein an average particle diameter (D50) of the single particle positive electrode material is 1 um or more and 10 um or less.

4. The lithium secondary battery of claim 1, wherein the SiOx (0<x<2) is included in an amount of 1 part by weight or more and 50 parts by weight or less and the carbon-based material is included in an amount of 50 parts by weight or more and 99 parts by weight or less, on the basis of 100 parts by weight of the negative electrode active material.

5. The lithium secondary battery of claim 1, wherein the negative electrode active material layer comprises a negative electrode conductive material, and a negative electrode binder.

6. The lithium secondary battery of claim 1, wherein the positive electrode conductive material comprises a singlewalled carbon nanotube (SWCNT) or a multi-walled carbon nanotube (MWCNT), and
wherein the positive electrode conductive material is included in an amount of 0.1 part by weight or more and 2 parts by weight or less on the basis of 100 parts by weight of the positive electrode composition.

7. The lithium secondary battery of claim 1, wherein the positive electrode active material further comprises a secondary particle positive electrode material, and
wherein the single particle positive electrode material and the secondary particle positive electrode material satisfy a weight ratio of 2: 8 to 5:5 (single particle positive electrode material:secondary particle positive electrode material).

8. The lithium secondary battery of claim 1, wherein the sacrificial positive electrode material and the SiOx (0<x<2) satisfy a weight ratio of 1:3 to 1:8 (sacrificial positive electrode material:SiOx).

9. The lithium secondary battery of claim 1, wherein the negative electrode active material comprises a Mg compound phase or a Li compound phase.

10. The lithium secondary battery of claim 1, wherein an initial efficiency of the positive electrode is lower than an initial efficiency of the negative electrode, and
wherein the initial efficiency of the positive electrode is 89% or less.

11. The lithium secondary battery of claim 1, wherein the lithium secondary battery has a capacity retention of 70% or higher under 0.5 V over-discharge conditions of 200 cycles.

12. The lithium secondary battery of claim 1, wherein thicknesses of the positive electrode and negative electrode current collector layers are each independently 1 um or more and 100 um or less, and
wherein thicknesses of the positive electrode and negative electrode active material layers are each independently 20 um or more and 500 um or less.
